# EUROPÄISCHE PATENTSCHRIFT

(11) **EP 2 461 936 B1**
(45) Veröffentlichungstag und Bekanntmachung des Hinweises auf die Patenterteilung: **10.10.2018**
(21) Anmeldenummer: 10752277.3
(22) Anmeldetag: 05.08.2010
(51) Int. Cl.: B23K 35/02, B23K 35/30, C22C 19/03, C22C 19/05, F01D 5/00, B23P 6/00

(54) **REPARATUR VON TURBINENBAUTEILEN**
METHOD OF REPAIRING A TURBINE COMPONENT
MÉTHODE DE RÉPARATION D'UN COMPOSANT DE TURBINE

(30) Priorität: 06.08.2009 DE 102009036405
(43) Veröffentlichungstag der Anmeldung: 13.06.2012
(73) Patentinhaber: MTU Aero Engines AG, 80995 München (DE)
(72) Erfinder: DANIELS, Bernd, 82194 Gröbenzell (DE); HILLEN, Michael, 82140 Olching (DE)
(86) Internationale Anmeldenummer: PCT/DE2010/000919
(87) Internationale Veröffentlichungsnummer: WO 2011/015192

(56) Entgegenhaltungen:
- EP-A2- 0 270 785
- EP-A2- 1 197 290
- EP-A2- 1 258 312
- US-A- 3 713 206
- US-A- 4 008 844

## Beschreibung

### HINTERGRUND DER ERFINDUNG

### GEBIET DER ERFINDUNG

Die vorliegende Erfindung betrifft ein Verfahren zur Reparatur von Bauteilen einer Gasturbine aus einer Superlegierung sowie eine entsprechende Lotlegierung hierfür,

### STAND DER TECHNIK

Aus dem Stand der Technik sind vielfältige Verfahren zur Reparatur von Bauteilen einer Gasturbine und insbesondere von Bauteilen von Gasturbinen zur Verwendung bei Flugzeugen (Flugturbinen) bekannt. Beispiele hierfür sind in der US 5,705,281, US 5,561,827, US 5,628,814, US 6,503,349, EP 1 258 312 A2, WO 2007/031400 A1, EP 1 790 745 A1, US 5,066,459, US 5,182,080, US 5,666,643, US 2005/0274009 A1, KR 1020010104662 A, EP 0 800 889 B1, US 2006/0134454 A1, GB 2 409 210 A, EE 699 20 257 T2, EP 1 197 290 A2, EP 1 818 132 A2, DE 32 37 776 C2, CA 2 496 189, CA 2 520 681, CA 2 581 908, US 2006/0174482 A1 und US 2006/013717 A1 beschrieben.

Die dort beschriebenen Verfahren und Reparaturmaterialien weisen jedoch den Nachteil auf, dass die Reparaturmaterialien meist nur für bestimmte Substratmaterialien geeignet und auf diese abgestimmt sind und bei den Reparaturverfahren aufwendige Einzelprozesse für die Reparatur einzelner Schädigungsarten durchgeführt werden müssen, so dass die Reparatur insgesamt sehr aufwändig ist.

Aus der EP 1 197 290 A2 ist ein Reparaturverfahren mit den Merkmalen des Oberbegriffes von Anspruch 1 bekannt. Aus der EP 1 258 312 A2 ist ein Verfahren zur Reparatur von Turbinenkomponenten aus einer einkristallinen Ni - Basis - Superlegierung bekannt, bei dem nach dem Auftragen einer Reparaturlegierung auf die Turbinenkomponente diese mehrmals erwärmt und abgekühlt wird. In der US 4 008 844 A ist ein
Reparaturverfahren für Turbinenkomponenten beschrieben, bei welchem eine Reparaturlegierung auf die zu reparierende Komponente aufgetragen wird, die einen den Schmelzpunkt der Reparaturlegierung herabsetzenden Bestandteil aufweist. Die Turbinenkomponente wird bei dem Verfahren zwei Wärmebehandlungsschritten unterzogen, nämlich zum Schmelzen der Reparaturlegierung und zum Homogenisieren derselben. Schließlich ist in der EP 0 270 785 A2 ein Reparaturverfahren beschrieben, bei dem eine Co/Ni - CrALY - Reparaturlegierung auf einem Oberflächendefekt einer Turbinenkomponente angeordnet wird und anschließend eine Wärmebehandlung zum Schmelzen der Reparaturlegierung durchgeführt wird.

### OFFENBARUNG DER ERFINDUNG

### AUFGABE DER ERFINDUNG

Es ist deshalb Aufgabe der vorliegenden Erfindung ein Verfahren zur Reparatur von Bauteilen einer Gasturbine, insbesondere einer Flugturbine, auf Basis von Superlegierungen bereit zu stellen, welches effektiv durchführbar und variabel einsetzbar ist. Insgesamt soll somit der Aufwand für die Durchführung von Reparaturarbeiten erniedrigt werden, wobei die Qualität der reparierten Bauteile entsprechend den Anforderungen auf einem hohen Niveau beibehalten werden soll.

### TECHNISCHE LÖSUNG

Diese Aufgabe wird gelöst durch ein Verfahren mit den Merkmalen des Anspruches 1. Vorteilhafte Ausgestaltungen des Verfahrens sind Gegenstand der abhängigen Ansprüche.

Die Erfindung geht aus von der Erkenntnis, dass für die unterschiedlichen Schädigungen, die bei Bauteilen von Gasturbinen und insbesondere Flugturbinen auftreten können, wie beispielsweise punktförmigen Schädigungen in Form von Löchern oder dergleichen, linienförmigen Fehlstellen, wie Rissen und dergleichen, oder flächenhaften Fehlern, wie Materialabtragungen usw., ein vereinfachtes Reparaturverfahren dadurch bereit gestellt werden kann, dass die unterschiedlichen Schädigungen nicht getrennt in einzelnen Verfahren repariert werden, sondern gemeinsam durch Verwendung eines gemeinsamen Lots und/oder einer Lotlegierung für die Reparatur. Dabei werden die flächenhaften Materialabtragungen durch Auflöten eines Reparaturformteiles beseitigt, während die punktuellen oder linienhaften Fehler, wie Löcher, ausgerissene Kühlluftlöcher, Risse und dergleichen, durch Auffüllen mit dem entsprechenden Lot und/oder der entsprechenden Lotlegierung repariert werden. Das Lot und/oder die Lotlegierung kann somit in einem einzigen Arbeitsgang für das Auflöten eines Reparaturformteils als auch zum Ausbessern von Lochstellen, ausgerissenen Kühlluftlöchern und Rissen verwendet werden.

Bei der vorliegenden Erfindung wird unter Lotlegierung eine Legierung verstanden, die eine NiCoCrAlY-Legierung und ein Ni-basiertes Lot aufweist, während unter dem Lot lediglich das Ni-basierte Lot als niedrig schmelzende Komponente verstanden wird. Die NiCoCrAlY- Legierung liefert die erforderlicher Oxidationsbeständigkeit und mechanische Festigkeit, während das Ni-basierte Lot die stoffschlüssige Verbindung der Lotlegierung in Form einer Matrix für die eingebetteten NiCoCrAlY-Partikel und für das zu reparierende Bauteil bereitstellt.

Gemäß der Erfindung wird vorgesehen ein Reparaturformteil aus der Lotlegierung für die Reparatur flächiger Fehler, wie z.B. bei einem flächigen Materialabtrag, bereit zu stellen und
zusätzlich punktuelle oder lineare Fehler, wie Risse, Löcher und dergleichen, durch Aufbringen des Lotes und/oder der Lotlegierung zu verschließen. Das Reparaturformteil wird hierbei ebenfalls durch das Lot und/oder die Lotlegierung aufgelötet, wobei das Reparaturformteil, da es aus der Lotlegierung gebildet ist, ohne zusätzliche Aufbringung des Lotes und/oder der Lotlegierung unmittelbar auf dem Substrat haften kann. Während die Verwendung des Ni-basierten Lotes zur Verbindung des Reparaturformteils mit dem zu reparierenden Bauteil oder zur Auffüllung von Fehlstellen im zu reparierenden Bauteil denkbar ist, ist die Verwendung der Lotlegierung bevorzugt, wobei insbesondere die Lotlegierung sowohl für das Verschließen von Löchern, Rissen oder kleinflächigem Materialabtrag als auch als Reparaturformteil eingesetzt werden kann, und wobei das Reparaturformteil wiederum unmittelbar ohne zusätzliches Bindemittel, d.h. ohne zusätzliches Lot bzw. Lotlegierung auf eine flächige Schadstelle aufgelötet werden kann. Die Lotlegierungen für das direkte Zulöten von punktuellen oder linienförmigen Fehlstellen und für das Reparaturformteil können bei grundsätzlich ähnlicher Zusammensetzung hinsichtlich elementmäßiger und / oder anteilsmäßiger Zusammensetzung leicht variieren. Insbesondere können Lotlegierungen eingesetzt werden, bei denen die gleichen Komponenten oder Elemente anteilsmäßig leicht unterschiedlich enthalten sind.

Das entsprechend mit Lot und/oder Lotlegierung bzw. dem Reparaturformteil versehene, zu reparierende Bauteil wird dann einer einzigen Wärmebehandlung zur Ausbildung der Lotverbindung unterzogen, wobei sowohl das Reparaturformteil auf das Bauteil aufgelötet als auch die Fehlstellen, die mit Lot und/oder Lotlegierung gefüllt sind, entsprechend fest und sicher verschlossen werden.

Die Lotlegierung ist so ausgerichtet, dass sowohl Ni-Basis-Superlegierungen als auch Co-Basis-Superlegierungen entsprechend behandelt werden können. Dadurch ist ein universeller Einsatz bei Gasturbinen und insbesondere bei Flugturbinen möglich.

Das Lot und/oder die Lotlegierung können als Pulver bzw. Pulvermischung mit oder ohne Bindemittel auf das Bauteil aufgebracht werden. Als Bindemittel kommen organische Bindemittel oder sonstige Bindemittel in Frage, die bei der nachfolgenden Wärmebehandlung zum Löten verflüchtigen oder durch Verbrennen entfernt werden.

Entsprechend kann das Reparaturformteil aus einer Pulvermischung der Lotlegierung mit oder ohne Binder geformt werden, wobei entsprechende Techniken zur Formbildung, wie beispielsweise Pressen und dergleichen eingesetzt werden können.

Das Reparaturformteil kann als entsprechender Grünling direkt auf das zu reparierende Bauteil aufgebracht werden, oder vor dem Aufbringen gesintert werden. Insbesondere kann als Sinterprozess ein mehrstufiger Temperaturbehandlungsprozess mit unterschiedlichen Haltetemperaturen und Haltedauern vorgesehen sein.

In gleicher Weise kann die Wärmebehandlung zur Ausbildung der Lotverbindung ein mehrstufiger Wärmebehandlungsprozess mit verschiedenen Haltetemperaturen und Haltedauern sein.

Die NiCoCrAlY-Legierung, die als Bestandteil der Lotlegierung eingesetzt wird, kann eine Zusammensetzung von 9 bis 16 Gew.%, insbesondere 11 bis 14 Gew.% und vorzugsweise 12,5 bis 13 Gew.% Aluminium, 18 bis 25 Gew.%, insbesondere 20 bis 24 Gew.% und vorzugesweise 22,5 bis 23 Gew.% Kobalt, 15 bis 20 Gew.%, insbesondere 17 bis 19 Gew.% und vorzugsweise 17,5 bis 18 Gew.% Chrom sowie 0,1 bis 1 Gew.%, vorzugsweise 0,3 bis 0,7 Gew.% und insbesondere 0,55 bis 0,6 Gew.% Yttrium aufweisen. Der Rest wird durch Nickel sowie unvermeidbare Verunreinigungen gebildet.

Erfindungsgemäß weist das Ni-basierte Lot mindestens einen Chromgehalt von 15 Gew.% und mindestens einen Eisen- und / oder Wolframgehalt von 15 Gew.% auf. Der Kobaltgehalt kann auf maximal 25 Gew.% begrenzt sein. Durch den entsprechend hohen Chromanteil ist eine gute Oxidations- und Korrosionsbeständigkeit gegeben.

Das Ni-basierte Lot, welches ebenfalls Bestandteil der Lotlegierung ist, kann eine Zusammensetzung von 15 bis 25 Gew.%, insbesondere 19 bis 23 Gew.% und vorzugsweise 21,5 bis 22 Gew.% Eisen und / oder Wolfram, höchstens 10 Gew.%, vorzugsweise höchstens 5 Gew.%, insbesondere höchstens 2,5 Gew.% Kobalt, 15 bis 25 Gew.%, insbesondere 20 bis 23 Gew.% und vorzugsweise 20,5 bis 21 Gew.% Chrom. 7 bis 11 Gew.%, vorzugsweise 8 bis 10 Gew.% und insbesondere 9 bis 9,5 Gew.% Molybdän, 4 bis 8 Gew.%, insbesondere 5 bis 7 Gew.% und insbesondere 6 bis 6,5 Gew.% Silizium aufweisen. Der Rest wird wiederum durch Nickel und unvermeidbare Verunreinigungen gebildet.

Die NiCoCrAlY-Legierung und das Ni-basierte Lot können mit Anteilen von 30 bis 70 Gew.% der NiCoCrAlY-Legierung, insbesondere mit einem Anteil von 40 bis 60 Gew.% in der Lotlegierung vorgesehen sein, während das Ni-basierte Lot einen Gewichtsanteil von 30 bis 70 Gew.% und insbesondere 40 bis 60 Gew.% aufweisen kann. Vorzugsweise kann die Lotlegierung für das Ausbessern von punktuellen und / oder linienförmigen Fehlstellen einen höheren Lotanteil aufweisen, während das Reparaturformteil einen höheren Anteil der NiCoCrAlY-Legierung aufweisen kann.

### KURZBESCHREIBUNG DER FIGUREN

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Zeichnungen zeigen hierbei in rein schematischer Weise in
- Fig. 1: eine perspektivische Darstellung eines Substrats;
- Fig. 2: eine perspektivische Darstellung eines Substrats mit einem Reparaturformteil;
- Fig. 3: eine perspektivische Darstellung des Reparaturformteiles während der Auf bringung auf das Substrat;
- Fig. 4: eine perspektivische Darstellung des Substrats mit dem darauf angebrachten Re paraturformteil;
- Fig. 5: eine perspektivische Darstellung einer Turbinenschaufel, die gemäß der vor liegenden Erfindung repariert wird;
- Fig. 6: eine perspektivische Darstellung eines Substrats gemäß Figur 1;
- Fig. 7: eine perspektivische Darstellung des Substrats und eines Reparaturformteiles, wobei das Substrat zur Verbindung mit dem Reparaturformteil vorbereitet ist;
- Fig. 8: eine perspektivische Darstellung der Verbindung des Reparaturformteiles mit dem Substrat;
- Fig. 9: eine perspektivische Darstellung des Substrats mit dem verbundenen Reparaturformteil gemäß der Darstellungen der Figuren 6 bis 8; und in
- Fig. 10: eine perspektivische Darstellung einer Turbinenschaufel, die gemäß der vorliegenden Erfindung nach der Ausführungsform 6 bis 9 repariert wird.

### AUSFÜHRUNGSBEISPIELE

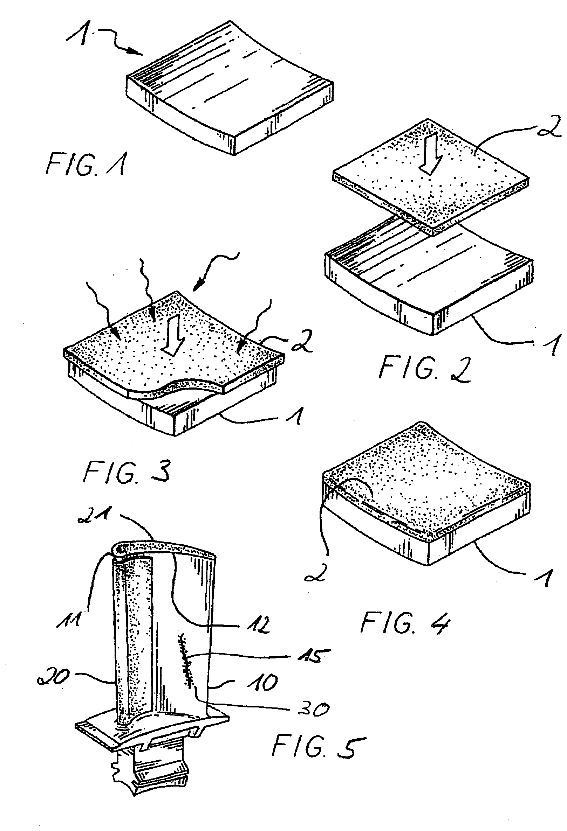

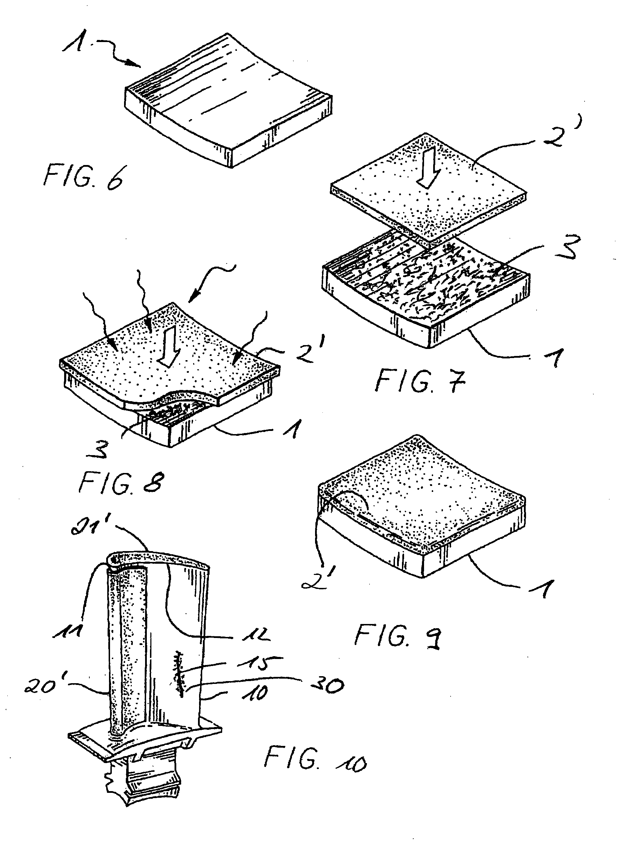

Die Figur 1 zeigt in einer perspektivischen Darstellung ein Substrat 1 aus einer Ni- oder Co-Basis-Superlegierung, welche gemäß der vorliegenden Erfindung repariert werden soll. Unter Reparatur wird hierbei verstanden, dass ein Materialabtrag an der Oberfläche eines Bauteils einer Gasturbine durch entsprechenden erneuerten Materialauftrag ausgeglichen wird und/oder punktuelle oder lineare Schädigungen, wie beispielsweise Risse, Löcher und dergleichen entsprechend wieder aufgefüllt werden. Das in der Figur 1 dargestellte Substrat 1 ist der Einfachheit halber als quaderartige Platte dargestellt, wobei jedoch die zu reparierenden Bauteile einer Gasturbine, insbesondere Turbinenschaufeln oder Verdichterschaufeln, die nachfolgend in den Ausführungsbeispielen der Figuren 5 und 10 gezeigt werden, oder Turbinenauskleidungen (shrouds) unterschiedlich geformt sein können.

Gemäß der vorliegenden Erfindung wird für den Ersatz von Material durch einen flächigen Materialabtrag ein Reparaturformteil 2 hergestellt, welches in dem Bereich auf das zu reparierende Bauteil, d.h. das Substrat 1 aufgebracht wird, in welchem der entsprechende Materialabtrag stattgefunden hat.

Das Reparaturformteil 2 wird aus einer Lotlegierung gebildet, welche eine hoch schmelzende und eine niedrig schmelzende Komponente, das eigentliche Lot, umfasst. Die hoch schmelzende Komponente ist durch eine NiCoCrAlY-Legierung gebildet, die ungefähr einen Kobaltanteil von 22 bis 23 Gew.%, einen Chromanteil von ca.17 bis 18 Gew.%, einen Aluminiumanteil von ca. 12 bis 13 Gew.% und einen Yttriumanteil von ca. 0,5 Gew.% aufweist. Der Rest wird durch Nickel sowie unvermeidbare Verunreinigungen gebildet, wobei natürlich die Verunreinigungen so niedrig wie möglich gehalten werden.

Die niedrig schmelzende Komponente wird durch ein Ni-basiertes Lot gebildet, welches einen Eisenanteil von 21 bis ca. 22 Gew.%, einen Chromanteil von ca. 21 Gew.%, einen Molybdänanteil von ca. 9 Gew.%, einen Siliziumanteil von ca. 6 Gew.% und einen Kobaltanteil von ca. 2,5 Gew.% aufweist. Der Rest wird wiederum durch Nickel bzw. unvermeidbare Verunreinigungen gebildet.

Die hoch schmelzende Komponente, also die NiCoCrAlY-Legierung, liegt in der Lotlegierung in einem Anteil von ca. 60 Gew.% vor, während die niedrig schmelzende Legierung in einem Anteil von ca. 40 Gew.% vorliegt.

Das Reparaturformteil 2, welches auch als Tape bezeichnet wird, kann durch verschiedenste Techniken geformt werden. Beispielsweise kann die Lotlegierung in Pulverform vorliegen, die einen gewissen Bindemittelanteil aufweist, wobei das Bindemittel die Pulverpartikel der Lotlegierung zusammenhält und eine Formgebung ermöglicht. Beispielsweise kann die Formgebung durch Pressen erfolgen. Das durch Pressen geformte Reparaturformteil aus Pulver oder Pulver mit Bindemittel kann als Grünling bezeichnet werden. Ein Binder kann beispielsweise aus einem organischen Material gebildet sein, welches bei der anschließenden Wärmebehandlung zum Auflöten des Reparaturformteils oder einer vorgeschalteten Sinterbehandlung rückstandsfrei verbrennt oder sich verflüchtigt. Beispielsweise kann das Reparaturformteil 2 aus der pulverförmigen Lotlegierung und dem Bindemittel in eine entsprechende Form gepresst sein, wobei der dadurch entstandene Grünling unmittelbar zur Aufbringung auf das Substrat vorgesehen sein kann, wie in Figur 2 und 3 dargestellt. In diesem Fall findet also nur ein Lötprozess zur Aufbringung des Grünlings statt. Alternativ kann zusätzlich eine Sinterbehandlung des Grünlings vorgesehen werden, so dass nach einer Sinterbehandlung des Grünlings das Reparaturformteil als gesintertes Formteil, wie in den Figuren 7 und 8 dargestellt, in einem Lotprozess aufgebracht wird. Während des Sinterns kann neben dem Ausgasen des Binders aus dem Grünling eine stoffschlüssige Verbindung teilweise, ausschließlich oder überwiegend durch Festkörperreaktionen auf Grund von Diffusionsvorgängen stattfinden.

In den Figuren 2 und 3 ist dargestellt, dass das Reparaturformteil 2 als Grünling unmittelbar auf das Substrat 1 aufgebracht wird, wobei in der Figur 3 dargestellt ist, dass durch Temperatureinwirkung (siehe gewellte Pfeile) die niedrig schmelzende Komponente der Lotlegierung, also das nickelbasierte Lot, aufschmilzt und durch Bildung von flüssigen Phasen zu einer stoffschlüssigen Verbindung zwischen dem Reparaturformteil 2 und dem Substrat 1 führt. Gleichzeitig kommt es zur Verbindung der Pulverpartikel des Reparaturformteiles 2 bei gleichzeitiger Entfernung des Bindemittelanteils, so dass ein fest haftender Überzug auf dem Substrat 1 entsteht (siehe Figur 4).

Ein entsprechend repariertes Bauteil in Form einer Turbinenschaufel ist in Figur 5 dargestellt. Die Turbinenschaufel 10 weist an der Spitze 12 sowie an der Führungskante 11 jeweils aufgebrachte Reparaturformteile 21 bzw. 20 auf, die gemäß der Vorgehensweise, wie Sie anhand der Figuren 1 bis 4 dargestellt worden ist, auf die Turbinenschaufel 10 aufgebracht worden sind.

Zudem ist in Figur 5 ein Riss 15 dargestellt, der durch Aufbringen der pulverförmigen Lotlegierung 30 und anschließendes Verlöten ebenfalls verschlossen worden ist.

Gemäß der Erfindung kann durch einen einzigen Wärmebehandlungsvorgang, dem die Turbinenschaufel 10 unterzogen wird, eine vollständige Reparatur der Turbinenschaufel 10 vorgenommen werden, indem beispielsweise an den Bereichen der Turbinenschaufel 10, die einen Materialabtrag erfahren haben, beispielsweise die Führungskante 11 und die Schaufelspitze 12, entsprechende Reparaturformteile 20, 21 aufgebracht werden und in anderen Bereichen, in denen punktuelle oder linienartige Fehlstellen, wie beispielsweise Löcher oder Risse vorliegen, die Lotlegierung direkt aufgebracht wird, so dass bei der gemeinsamen Wärmebehandlung die Reparaturformteile aufgelötet und die punktuellen oder linienförmigen Fehlstellen durch die Lotlegierung unmittelbar verschlossen werden.

Die Lotlegierung 30, wie sie oben definiert und beschrieben ist, kann in Form einer Paste, als Formteil oder in jeder anderen geeigneten Form auf und/oder in den Riss 15 durch unmittelbares Eindringen der pulverförmigen Lotlegierung oder unter Verwendung eines Bindemittels in der Art einer Paste, eines Formteils oder dergleichen durch Streichen, Spachteln, Spritzen oder in jeder anderen geeigneten Art und Weise aufgebracht werden.

Die Wärmebehandlung des zu reparierenden Bauteils, beispielsweise der Turbinenschaufel, wie sie in Figur 5 dargestellt ist, erfolgt in einem mehrstufigen Wärmebehandlungsprozess, wobei beispielsweise mehrere Haltestufen bei unterschiedlichen Temperaturen vorgesehen sind. So kann beispielsweise zunächst eine Aufheizung auf eine erste Temperatur im Bereich von 450°C bis 500°C erfolgen, an die sich eine Haltezeit, beispielsweise von 10 bis 60 Minuten, bei dieser Temperatur anschließt. Anschließend kann eine weitere Aufheizung auf eine zweite Temperatur im Bereich von ca. 600°C bis 1000°C erfolgen, bei der sich wiederum eine Haltezeit, z.B. on 10 bis 60 Minuten anschließt. Die Aufwärmzeiten können sich hierbei im Bereich von einer viertel Stunde bis 2 Stunden bewegen. Anschließend kann das Bauteil weiter auf 1250°C bis 1270°C aufgeheizt werden und dort für eine bestimmte Zeit, beispielsweise eine halbe Stunde bis zwei Stunden gehalten werden. Danach kann das Bauteil mit einer Abkühlrate von mindestens 20°C pro Minute auf unter 1080°C abgekühlt werden. Anschließend kann das Bauteil mit einer Abkühlrate von mindestens 20°C pro Minute auf unter 650°C abgekühlt werden. Die weitere Abkühlung auf Raumtemperatur kann mit einer beliebigen Abkühlrate erfolgen. Im Anschluss an diesen Abkühlprozess kann eine dreistufige Wärmebehandlung durchgeführt werden.

Im ersten Schritt der Wärmebehandlung kann eine Aufheizung, beispielsweise auf eine Temperatur von 1100°C bis 1150°C, erfolgen, an die sich eine längere Haltezeit bei dieser Temperatur, beispielsweise vier bis acht Stunden anschließt. Die Aufwärmzeiten können sich hierbei im Bereich von einer viertel Stunde bis zwei Stunden bewegen. Im Anschluss kann eine Abkühlung auf unter 650°C mit einer Abkühlrate von mindestens 20°C pro Minute erfolgen. Die weitere Abkühlung auf Raumtemperatur kann wiederum mit einer beliebigen Abkühlrate erfolgen.

Im zweiten Schritt der Wärmebehandlung, der beispielsweise im Zusammenhang mit einem Beschichtungsprozess, z.B. Alitieren, erfolgen kann, kann eine Aufheizung, beispielsweise auf eine Temperatur von 1050°C bis 1100°C erfolgen, an die sich eine längere Haltezeit bei dieser Temperatur von z.B. vier bis acht Stunden anschließen kann. Die Aufwärmzeiten können sich hierbei im Bereich von einer halben Stunde bis zwei Stunden bewegen. Die Abkühlung auf Raumtemperatur kann wiederum mit einer beliebigen Abkühlrate erfolgen.

Im dritten und letzten Schritt der Wärmebehandlung kann eine Aufheizung, beispielsweise auf eine Temperatur von 850°C bis 950°C erfolgen, an die sich wiederum eine längere Haltezeit bei dieser Temperatur, z.B. von zwei bis sechs Stunden anschließen kann. Die Aufwärmzeiten können sich hierbei im Bereich von einer halben Stunde bis eineinhalb Stunden bewegen. Die Abkühlung auf Raumtemperatur kann wiederum mit einer beliebigen Abkühlrate erfolgen.

Die gesamte Wärmebehandlung kann in einem Vakuumofen oder unter Schutzgas, wie beispielsweise Argon durchgeführt werden. Auch die Abkühlung kann sowohl im Vakuum als auch bei schneller Abkühlung unter Verwendung von Schutzgas wie beispielsweise Argonkühlgas durchgeführt werden.

Die Figuren 6 bis 10 zeigen ähnlich den Figuren 1 bis 5 eine alternative Durchführung des erfindungsgemäßen Verfahrens. Identische Komponenten sind hierbei mit den gleichen Bezugszeichen versehen, so dass sich eine wiederholte Beschreibung für diese Komponenten erübrigt.

Wie in Figur 7 dargestellt ist, wird anstelle des Reparaturformteiles 2 in Form eines Grünlings, wie in Figur 2, ein gesintertes Reparaturformteil 2' verwendet, bei welchem die Lotlegierung, aus der das Reparaturformteil 2' gebildet ist, bereits in einem vorgeschalteten Sinterprozess zu dem Reparaturformteil gefügt worden ist.

Ein entsprechendes Reparaturformteil 2' kann beispielsweise ohne Bindemittel in einer Form aus der pulverförmigen Lotlegierung gebildet werden, da durch den Sinterprozess aus dem Pulver ein formstabiles Reparaturformteil 2' gebildet werden kann. Der Sinterprozess kann wiederum durch ein mehrstufiges Wärmebehandlungsverfahren gebildet sein, wobei mehrere Temperaturstufen, beispielsweise bei 300°C, 600°C und 1.100°C durchlaufen werden und das Pulver langsam auf diese Temperaturen aufgeheizt wird und bei den einzelnen Temperaturstufen jeweils für eine bestimmte Zeit, im Bereich von 10 Minuten bis 60 Minuten gehalten wird, um durch ein Ausgasen des Binders und durch Diffusionsvorgänge eine Verbindung der Pulverpartikel und ein formstabiles Reparaturformteil 2' zu bilden. Nach kurzer Haltedauer von beispielsweise 10 Minuten bis 120 Minuten bei der höchsten Temperaturstufe kann das Reparaturformteil durch entsprechende, schnelle Abkühlung unter Schutzgas, wie Argon, oder entsprechend langsame Ofenabkühlung zum Reparaturformteil 2' erstarren.

Das gesinterte Reparaturformteil 2' kann unmittelbar ohne weitere Hilfsmittel oder mittels der auf dem Substrat 1 aufgebrachten Lotlegierung 3 auf das Substrat 1 gelötet werden. Die Lotlegierung 3 kann hierbei in Pulverform oder unter Anwendung eines Bindemittels aufgestrichen oder in anderer geeigneter Art und Weise aufgebracht werden.

Darüber hinaus kann das Reparaturformteil, sei es als Grünling oder in gesinterter Form, durch andere geeignete Fixierverfahren an der zu reparierenden Stelle angeordnet werden, wie z. B. durch andere Binde- oder Heftverfahren, wie z. B. Kugelpunktheften, Kondensatorpunktheften, Verwendung von Bindern / Zement etc., bevor es fest verlötet wird.

Wie in Figur 8 dargestellt, wird das gesinterte Reparaturformteil 2' mittels der dünnen Schicht aus Lotlegierung 3, die auf dem Substrat 1 aufgetragen ist, bei Temperatureinwirkung aufgelötet, so dass sich wiederum eine feste Verbindung zwischen Reparaturformteil 2' und Substrat 1 ergibt (siehe Figur 9).

Entsprechend kann nach dieser Vorgehensweise, wie sie in den Figuren 6 bis 9 dargestellt ist, auch ein entsprechendes Bauteil einer Gasturbine, wie beispielsweise eine Turbinenschaufel oder eine Turbinenverkleidung (shroud) mit entsprechenden Reparaturformteilen 20' und 21' an der Führungskante 11 bzw. der Schaufelspitze 12 versehen werden. Auch hier können wiederum punktuelle oder linienförmige Schädigungen, wie Löcher, Risse und dergleichen, mittels direkt aufgebrachter Lotlegierung 30 aufgefüllt und verschlossen werden.

Die entsprechend reparierten Bauteile, wie beispielsweise die Turbinenschaufeln 10 aus den Figuren 5 und 10 sowie entsprechende Turbinenverkleidungen (shrouds), können nachfolgend, also nach der Aufbringung der Reparaturformteile bzw. der Lotlegierung, nachbearbeitet werden, um die exakte Kontur und Form der Bauteile einzustellten. Hierzu können Span abhebende Verfahren, wie Schleifen, Bohren, Fräsen und dergleichen, insbesondere auch Lasermaterialbearbeitung oder chemische Abtragsverfahren eingesetzt werden. Insbesondere können verschlossene Kühlkanäle oder Kühlluftlöcher wieder freigelegt oder geöffnet werden und die Strömungskanalfläche (flowpath surface) wieder eingestellt werden. Zusätzlich können auf den reparierten Bauteilen auch entsprechende Schichten, wie Oxidations- und/oder Korrosionsschutzschichten, beispielsweise durch Alitieren und dergleichen, wieder aufgebracht werden.

Vor der Reparatur kann die Oberfläche des zu reparierenden Bauteils vorbereitet werden, z. B. durch Bestrahlen mit Partikeln, wie z. B. SiC-Partikel oder dergleichen.

Obwohl die vorliegende Erfindung anhand der Ausführungsbeispiele detailliert beschrieben worden ist, ist für den Fachmann selbstverständlich, dass die Erfindung nicht auf diese Ausführungsformen beschränkt ist, sondern dass vielmehr Abwandlungen und Änderungen möglich sind, ohne den Schutzbereich, der durch die beigefügten Ansprüche definiert wird, zu verlassen. Insbesondere können Änderungen durch Weglassen einzelner Merkmale oder andersartige Kombination der vorgestellten Merkmale vorgenommen werden. Die vorliegende Erfindung umfasst insbesondere sämtliche Kombinationen aller vorgestellter Merkmale.

## Patentansprüche

1. Verfahren zur Reparatur von Bauteilen einer Gasturbine, insbesondere von sogenannten shrouds, d.h. Mantelringsegmenten, mit folgenden Schritten:
a) Bereitstellen einer Lotlegierung aus einer Mischung aus einer NiCoCrAlY-Legierung und einem Ni-basierten Lot;
b) Bereitstellen mindestens eines Reparaturformteils (2,20,21) aus einer Lotlegierung;
c) Aufbringen des mindestens einen Reparaturformteils (2,20,21) auf mindestens einen Bereich des Bauteils mit flächigem Materialabtrag mit oder ohne auf dem Bauteil angeordneten Lot und/oder angeordneter Lotlegierung; und
d) Wärmebehandlung des Bauteils zum Verlöten
**dadurch gekennzeichnet, dass**
die NiCoCrAl Y-Legierung 9 bis 16 Gew.% Aluminium, 18 bis 25 Gew.% Kobalt, 15 bis 20 Gew.% Chrom, 0,1 bis 1 Gew.% Yttrium und als Rest Nickel und unvermeidbare Verunreinigungen aufweist, dass das Ni-basierte Lot 15 bis 25 Gew.% Eisen und / oder Wolfram, höchstens 10 Gew.% Kobalt, 15 bis 25 Gew.% Chrom, 7 bis 11 Gew.% Molybdän, 4 bis 8 Gew.% Silizium und als Rest Nickel und unvermeidbare Verunreinigungen aufweist, dass die NiCoCrAlY-Legierung mit einem Anteil von 30 bis 70 Gew.% und das Ni-basierte Lot mit einem Anteil von 70 bis 30 Gew.% vorgesehen sind, und dass nach der Wärmebehandlung des Bauteils zum Verlöten drei weitere Wärmebehandlungsschritte als sogenannte Auslagerungsschritte erfolgen, wobei zwischen allen Wärmebehandlungsschritten eine Abkühlung des Bauteils erfolgt.

2. Verfahren nach Anspruch 1,
**dadurch gekennzeichnet, dass**
die Abkühlung des Bauteils jeweils bis auf Raumtemperatur erfolgt.

3. Verfahren nach Anspruch 1 oder 2,
**dadurch gekennzeichnet, dass**
mindestens einer der drei weiteren Wärmebehandlungsschritte vorzugsweise der zweite, - über den Zweck der sogenannten Auslagerung hinaus - zum Beschichten des Bauteils, vorzugsweise zum Alitieren, benutzt wird.

4. Verfahren nach einem der Ansprüche 1 bis 3,
**dadurch gekennzeichnet, dass**
das zu reparierende Bauteil aus einer Ni- oder Co-Basis-Superlegierung gebildet ist.

5. Verfahren nach einem der vorhergehenden Ansprüche,
**dadurch gekennzeichnet, dass**
das Lot und/oder die Lotlegierung als Pulvermischung mit oder ohne Bindemittel aufgebracht wird.

## Claims

1. Method for repairing components of a gas turbine, in particular shrouds, comprising the following steps:
a) providing a solder alloy composed of a mixture of a NiCoCrAlY alloy and a Ni-based solder;
b) providing at least one molded repair part (2, 20, 21) composed of a solder alloy;
c) applying the at least one molded repair part (2, 20, 21) onto at least one region of the component that has suffered planar material abrasion, using or without using solder and/or solder alloy placed on the component; and
d) heat-treating the component for the purpose of soldering;
**characterized in that**
the NiCoCrAlY alloy comprises 9 to 16 wt.% aluminum, 18 to 25 wt.% cobalt, 15 to 20 wt.% chromium, 0.1 to 1 wt.% yttrium, and the remainder is nickel and unavoidable impurities, **in that** the Ni-based solder comprises 15 to 25 wt.% iron and/or tungsten, at most 10 wt.% cobalt, 15 to 25 wt.% chromium, 7 to 11 wt.% molybdenum, 4 to 8 wt.% silicon, and the remainder is nickel and unavoidable impurities, **in that** the NiCoCrAlY alloy is provided in a proportion of 30 to 70 wt.% and the Ni-based solder is provided in a proportion of 70 to 30 wt.%, and **in that** three additional heat-treatment steps are carried out as aging steps after heat-treatment of the component for the purpose of soldering, the component being cooled between all heat-treatment steps.

2. Method according to claim 1, **characterized in that** the component is cooled in each case to room temperature.

3. Method according to either claim 1 or claim 2, **characterized in that** at least one of the three additional heat-treatment steps, preferably the second, is used not only for the purpose of aging but also for coating the component, preferably for alitizing same.

4. Method according to any of claims 1 to 3, **characterized in that** the component to be repaired is made from a Ni- or Co-based superalloy.

5. Method according to any of the preceding claims, **characterized in that** the solder and/or solder alloy is applied as a powder mixture using or without using binders.

## Revendications

1. Procédé de réparation de composants d'une turbine à gaz, en particulier ce que l'on appelle des anneaux de renforcement de turbine, c'est-à-dire des segments de virole, le procédé comprenant les étapes suivantes :
a) fourniture d'un alliage de brasage constitué d'un mélange d'un alliage NiCoCrAlY et d'une brasure à base de Ni ;
b) fourniture d'au moins un élément de moule de réparation (2, 20, 21) constitué d'un alliage de brasage ;
c) application d'au moins une partie de moule de réparation (2, 20, 21) sur au moins une zone du composant avec un mince enlèvement de matière avec ou sans brasure et/ou alliage de brasage disposé sur le composant ; et
d) traitement thermique du composant à braser
**caractérisé en ce que**
l'alliage NiCoCrAlY contient 9 à 16 % en poids d'aluminium, 18 à 25 % en poids de cobalt, 15 à 20 % en poids de chrome, 0,1 à 1 % en poids d'yttrium et le reste étant du nickel et des impuretés inévitables, **en ce que** la brasure à base de Ni contient de 15 à 25 % en poids de fer et/ou de tungstène, au maximum 10 % en poids de cobalt, 15 à 25 % en poids de chrome, 7 à 11 % en poids de molybdène, 4 à 8 % en poids de silicium et le reste étant du nickel et des impuretés inévitables, **en ce que** l'alliage NiCoCrAlY est prévu dans une proportion de 30 à 70 % en poids, et la brasure à base de Ni est prévue dans une proportion de 70 à 30 % en poids et **en ce que**, après le traitement thermique du composant à braser,
trois autres étapes de traitement thermique dite étapes de vieillissement sont effectuées, un refroidissement du composant étant effectué entre toutes les étapes de traitement thermique.

2. Procédé selon la revendication 1,
**caractérisé en ce que**
le refroidissement du composant est effectué à chaque fois jusqu'à la température ambiante.

3. Procédé selon la revendication 1 ou 2,
**caractérisé en ce que**
l'une au moins des trois autres étapes de traitement thermique, de préférence la deuxième, est utilisée, au-delà dudit vieillissement, pour revêtir le composant, de préférence pour le caloriser.

4. Procédé selon l'une des revendications 1 à 3,
**caractérisé en ce que**
le composant à réparer est formé à partir d'un superalliage à base de Ni ou de Co.

5. Procédé selon l'une des revendications précédentes,
**caractérisé en ce que**
la brasure et/ou l'alliage de brasage sont appliqués sous la forme d'un mélange de poudres avec ou sans liant.
